# EUROPEAN PATENT APPLICATION

(11) **EP 2 234 170 A1**
(43) Date of publication of application: **29.09.2010**
(21) Application number: 08868967.4
(22) Date of filing: 19.12.2008
(51) Int. Cl.: H01L 31/04

(54) **SOLAR BATTERY INSPECTING APPARATUS AND METHOD FOR JUDGING SOLAR BATTERY DEFECT**

(30) Priority: 28.12.2007 JP 2007339198
(71) Applicant: Nisshinbo Industries, Inc., Ningyo-cho Chuo-ku Tokyo 103-8650 (JP)
(72) Inventor: KASAHARA, Masato, Okazaki-shi Aichi 444-8560 (JP); SHIBUYA, Toshio, Okazaki-shi Aichi 444-8560 (JP)
(74) Representative: Skuhra, Udo
(86) International application number: PCT/JP2008/073895
(87) International publication number: WO 2009/084702

(57) **Abstract**

A photovoltaic devices inspection apparatus and a method of determining defects in photovoltaic devices using electroluminescence of the photovoltaic devices. The apparatus and method can not only determine whether the photovoltaic devices are defective or non-defective at the moment, but also whether the devices have a possibility to become defective in the future.

A constant electric current is applied to the photovoltaic cells to cause electroluminescence (S7), the light emitted from each cell is photographed cell by cell (S10), and the photographed cell image is enhanced and a shape of a dark region is analyzed (S50) to determine whether the cell is defective or non-defective. The defective region that is determined to be defective is enhanced and displayed visually (S16).

## Description

### BACKGROUND OF THE INVENTION

### FIELD OF THE INVENTION

The present invention relates to a photovoltaic devices inspection apparatus configured to inspect photovoltaic cells (which also means strings formed by connecting multiple photovoltaic cells in a row, and photovoltaic panels formed by disposing multiple strings in parallel), and a method of determining defects in photovoltaic devices.

### DESCRIPTION OF THE RELATED ART

It is well known that silicon photovoltaic devices are employed to harness solar energy. In the manufacture of photovoltaic devices, it is important to evaluate whether the photovoltaic devices have predetermined power generation capacity. The evaluation is usually performed by measuring output characteristics thereof.

The output characteristics are photovoltaic conversion characteristics evaluated by measuring current-voltage characteristics of the photovoltaic devices under light irradiation. As a light source, it is desirable to use solar light. However, since the intensity of the solar light varies with weather, a solar simulator is employed. In the solar simulator, a xenon lamp, a metal halide lamp, or the like is employed as an alternative to the solar light. If the aforementioned light source has been lighted for a long time, the temperature thereof rises, leading to variation in the light intensity thereof. Based on data collected using flash light of such a lamp, the output characteristic curves of the photovoltaic devices can be plotted by designating voltage as the horizontal axis and current as the vertical axis, and if the output characteristics of the photovoltaic devices are equal to or higher than certain reference values, the photovoltaic devices are determined to be non-defective (for example, refer to Patent Document 1).

Another method different from the above-described method using a solar simulator is disclosed in Patent Document 2. In this method, a voltage is applied to a polycrystalline silicon photovoltaic cell element in a forward direction so as to generate a forward current and thus emit electroluminescent light (hereinafter referred to simply as EL light), and it is determined from the state of the EL light whether the photovoltaic cell element is defective or non-defective. By inspecting the EL light emitted from the photovoltaic cell element, the current density distribution of the photovoltaic cell element can be obtained, and non-luminescent parts of the photovoltaic cell element detected from unevenness of the current density distribution are determined as defective parts. If the area of the defective parts is less than a predetermined value, the photovoltaic cell element is determined to have a predetermined electric generating capacity.

In the method of WO/2006/059615, however, since the determination of a photovoltaic panel is done just by judging whether the area of the defect parts is more than a predetermined value or less, it can only be determined whether the panel is usable or not at the moment and a status of the photovoltaic panel cannot be learned in detail. The possibility of having trouble during long-term usage is not considered in the determination.

Since a photovoltaic device is typically used outdoors, environment of usage is severe. Therefore, deterioration with usage is inevitable, and even if the photovoltaic devices are non-defective just after manufacture, power generation efficiency can deteriorate over time with usage.
Patent Document 1: JP2007-88419-A
Patent Document 2: WO/2006/059615

### BRIEF SUMMARY OF THE INVENTION

Accordingly, objects of the present invention are to provide a photovoltaic devices inspection apparatus and a method of determining defects in photovoltaic devices, **characterized in that** a predetermined current is applied to the photovoltaic devices to emit a EL light to determine whether the photovoltaic devices are defective or non-defective by the EL light emission status, and also identify a crack (including micro crack) that has a possibility to become defective in the future.

To achieve these objects, the present invention provides:
1. A novel photovoltaic devices inspection apparatus configured to determine whether a photovoltaic cell of photovoltaic devices is defective or non-defective and which is characterized by a power unit configured to apply a predetermined current to a photovoltaic cell as an inspection-object in a shading space, a photographing unit configured to photograph an emitting light cell by cell that is emitted from the cell in response to the current applied from the power unit, an analyzing unit configured to analyze the photographed cell image photographed by the photographing unit, and a displaying unit configured to visually display the analysis result obtained by the analyzing unit. The analyzing unit enhances the photographed cell image to analyze a shape of a dark region of the photographed cell image so as to determine whether the photovoltaic cell is defective or non-defective.
2. The displaying unit may emphatically display the dark region, which is identified as having a problem by the analyzing unit, on the displaying unit.
3. The photographing unit may photograph multiple photovoltaic cells sequentially, and the analyzing unit may determine a distance between adjacent cells that are photographed by the photographing unit.
4. The analyzing unit may detect a micro crack to determine a status of the photovoltaic cell that has a possibility to become defective in the future.
5. The analyzing unit may analyze a shape, a direction, and a location of a dark region of the photographed cell image to determine a status of the cell.
6. The displaying unit may visually display a cell image on which the dark region identified as having a problem by the analyzing unit is displayed emphatically, and a photographed cell image simultaneously.

The present invention also provides:
7. A method of determining defects in a photovoltaic cell to determine whether the cell is defective or non-defective, characterized by the steps of applying a predetermined current to a photovoltaic cell as an inspection-object in a shading space; photographing an emitting light cell by cell that is emitted from the cell in response to the current applied from the power unit; and analyzing a shape of a dark region of the photographed cell image by enhancing the photographed cell image so as to determine whether the photovoltaic cell is defective or non-defective
8. The method may further include displaying the dark region, which is identified as having a problem by the analyzing unit, emphatically on the displaying unit.
9. In addition, the method may further include photographing multiple photovoltaic cells sequentially and determining a distance between adjacent cells so as to determine whether a location of adjacent cells is correct or not.
10. In analyzing the photographed image, the method may detect a micro crack to determine a status of the photovoltaic cell that has a possibility to become defective in the future.
11. The method may analyze a shape, direction, and a location of a dark region of a photographed cell image to determine a status of the cell.
12. The method may further comprise simultaneously displaying visually a cell image on which the dark region, identified as having a problem by the analyzing unit, is displayed emphatically together with a photographed cell image.

According to the photovoltaic devices inspection apparatus and the method of determining defects in photovoltaic devices of the present invention, a dark region identified as having a problem is emphatically displayed on a display unit, so that an inspector can inspect the display visually and determine the condition of the photovoltaic devices easily and reliably.

Furthermore, the photovoltaic devices inspection apparatus and the method of determining defects in photovoltaic devices of the present invention can determine not only a current defect of a photovoltaic device, but also a region which has a possibility to become defective in the future easily and reliably. Therefore, photovoltaic devices having improved quality and durability during long-term usage can be provided.

### BRIEF DESCRIPTION OF THE DRAWINGS

Fig. 1 is a block diagram illustrating a schematic configuration according to an embodiment of the present invention.
Fig. 2 is a detailed view illustrating a camera position determination mechanism according to an embodiment of the present invention.
Fig. 3 is a flowchart for explaining a control of inspecting a photovoltaic device according to an embodiment of the present invention.
Fig. 4 is a flowchart for specifically explaining a photographed image processing step S50 of Fig. 3.
Fig. 5 illustrates exemplary image of an inspection result of a photovoltaic cell.
Fig. 6 is a view for explaining photovoltaic cells, strings, and a matrix as an inspection-object.
Fig. 7 is a sectional view illustrating the structure of a photovoltaic devices panel as an inspection-obj ect.
Fig. 8 is a view illustrating a photovoltaic cell as an inspection-object of the inspection apparatus of the present embodiment.
Fig. 9 is a view illustrating a defect of a photovoltaic cell in a photovoltaic devices panel as an inspection-object.
Fig. 10 is a view illustrating a defect of a photovoltaic cell in a photovoltaic panel as an inspection-obj ect.
Fig. 11 is a view illustrating a defect of a photovoltaic cell in a photovoltaic panel as an inspection-obj ect.
Fig. 12 is an exemplary photographed image of a polycrystalline silicon cell.
Fig. 13 is a view for explaining a method of identifying a dark region of a photographed cell image as a crack.

### DETAILED DESCRIPTION OF THE INVENTION

A detailed description will now be given of illustrative embodiments of the present invention, with reference to the accompanying drawings.

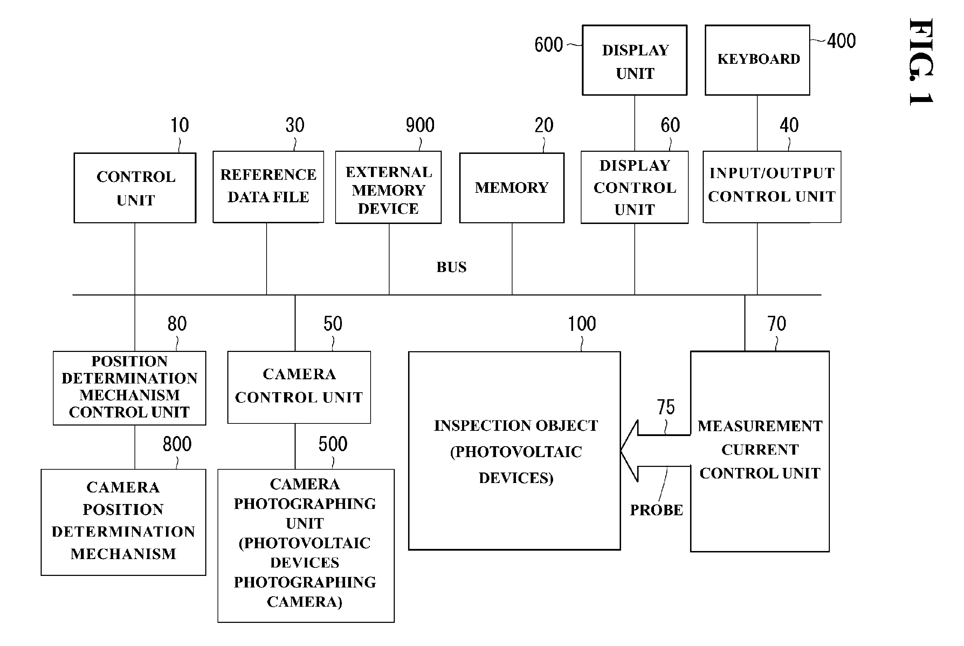

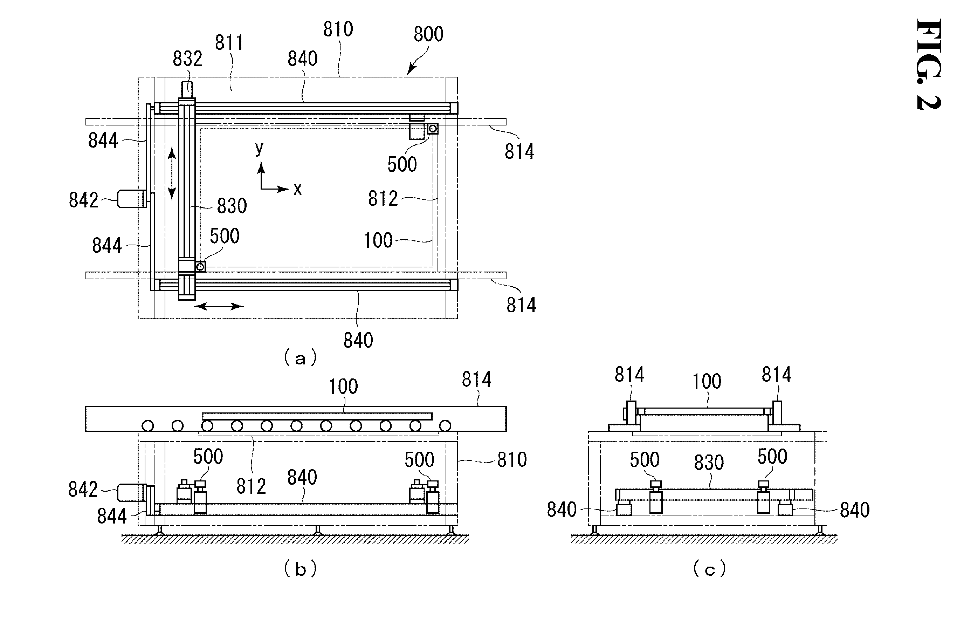

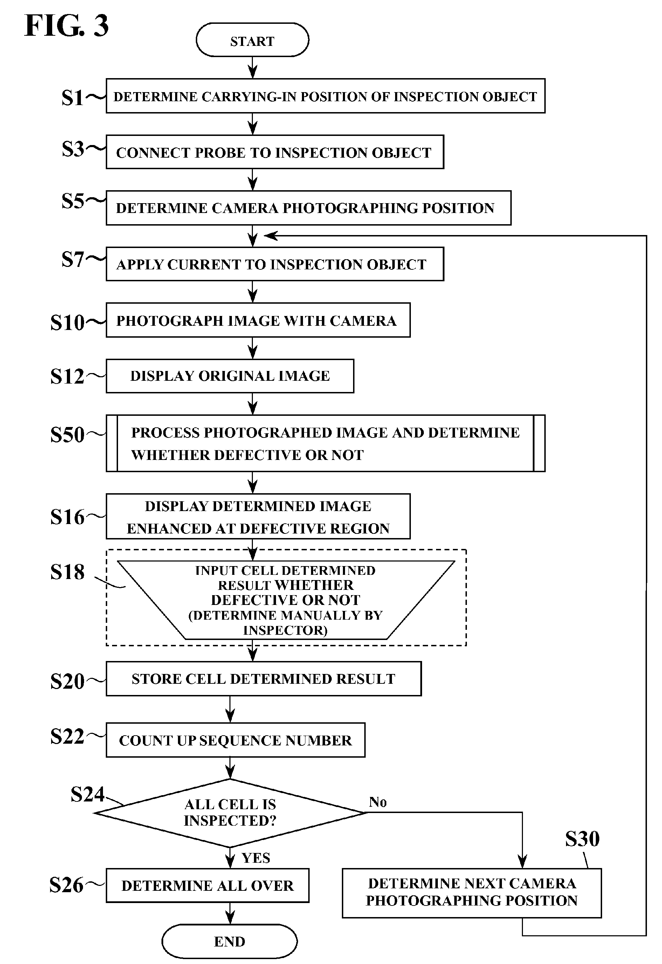

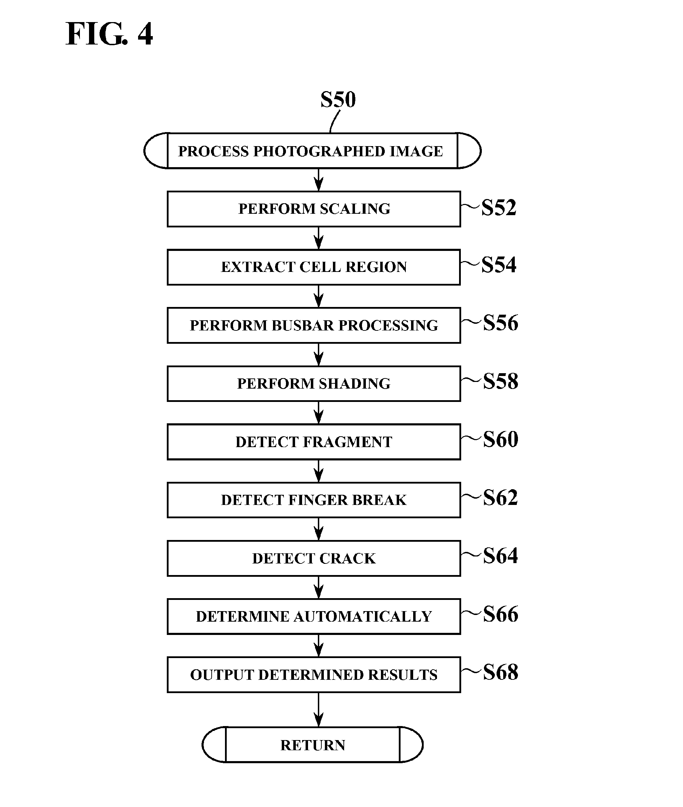

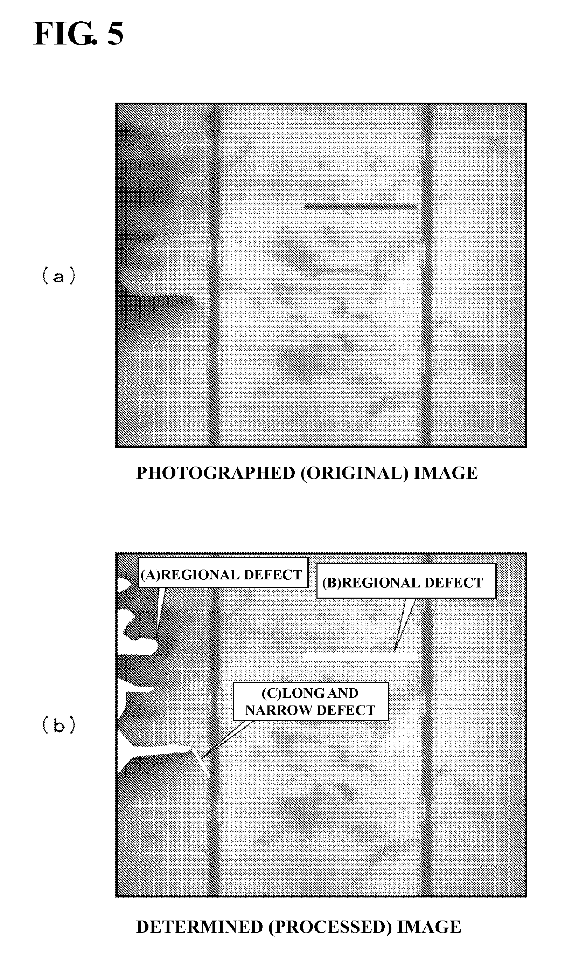

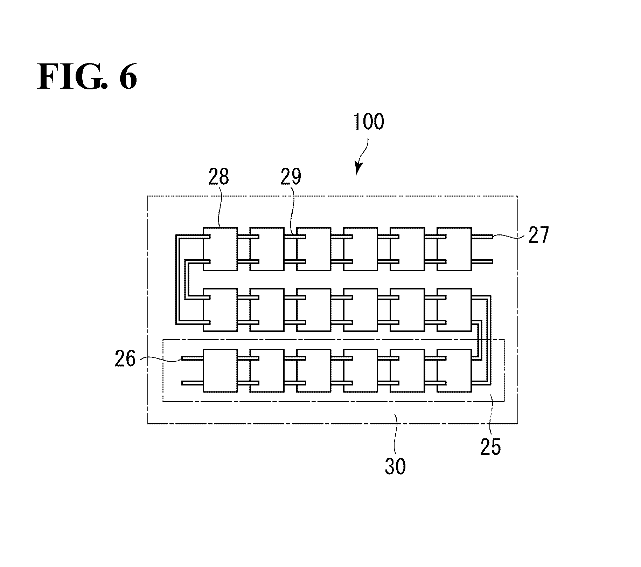

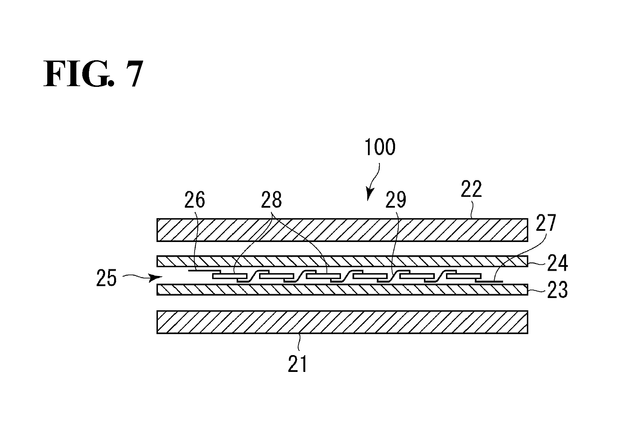

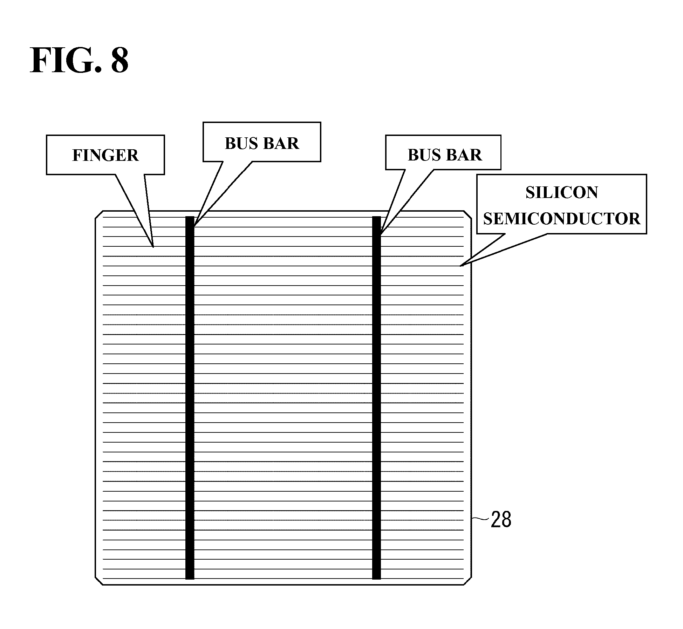

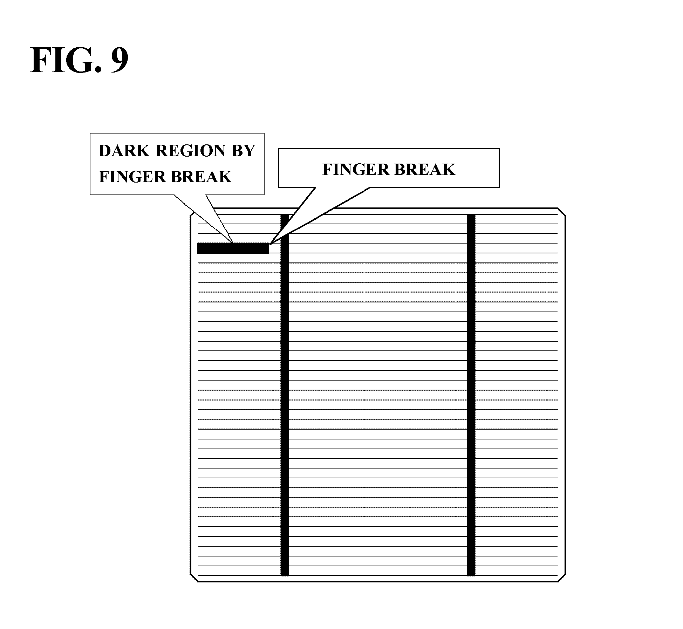

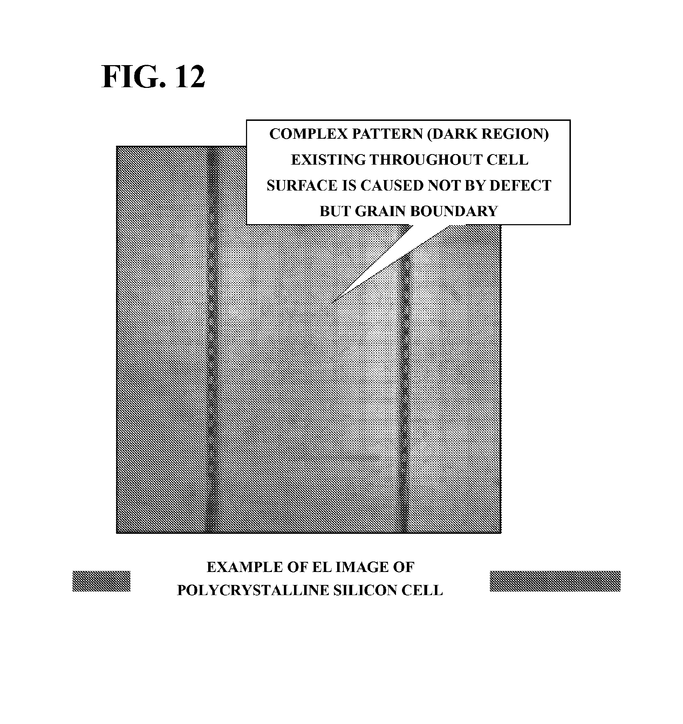

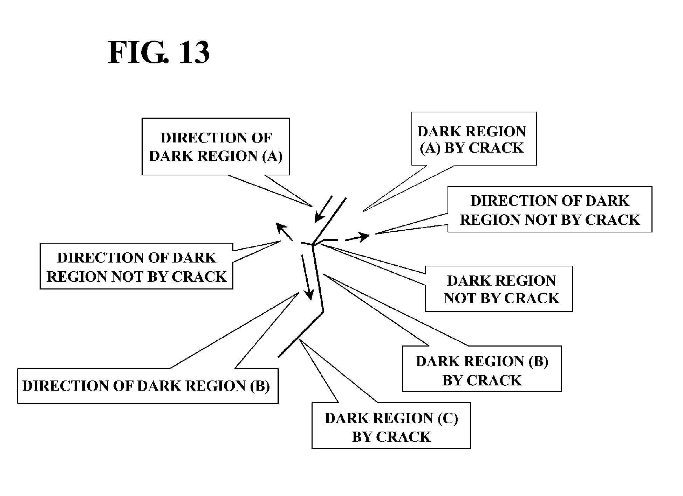

Fig. 1 is a block diagram illustrating a schematic configuration of a photovoltaic devices inspection apparatus according to an embodiment of the present invention, and Figs. 2(a) to 2(c) are views illustrating the configuration of a camera position determination mechanism of the apparatus of the embodiment, where Fig. 2(a) is a plan view, Fig. 2(b) is a front view, and Fig. 2(c) is a right side view. Fig. 3 is a flowchart for explaining a method of inspecting photovoltaic devices according to the embodiment; Fig. 4 is a flowchart for specifically explaining a photographed image processing and quality (whether passed or not) determining process; and Fig. 5(a) and 5(b) are exemplary images of a inspection result of the embodiment, where Fig. 5(a) illustrates the photographed image, and Fig. 5(b) illustrates the enhanced image. Fig. 6 is a plan view illustrating photovoltaic cells, strings, and a matrix of a photovoltaic device as an inspection-object, and Fig. 7 is a sectional view illustrating the structure of a photovoltaic devices. Fig. 8 is a view illustrating a photovoltaic cell as an inspection-object of an inspection apparatus of the embodiment. Figs. 9, 10, and 11 are views illustrating defects of photovoltaic cells as an inspection-object. Fig. 12 is an exemplary electroluminescence (EL) image photographed from polycrystalline silicon cells. Fig. 13 is a view for explaining a method of determining a dark region of a photographed cell image as a crack.

### Inspection-object (Photovoltaic Cell, Photovoltaic Panel)

First, an explanation will be given of an inspection-object 100 inspected for defects by an inspection apparatus of the present embodiment.

As illustrated in the plan view of Fig. 6, a string 25 is formed by connecting multiple rectangular photovoltaic cells 28 in series through lead wires 29, and multiple strings 25 are connected to each other through lead wires to form a photovoltaic devices panel as an inspection-object 100.

In the present invention, the photovoltaic devices as the inspection-object may be formed of a single photovoltaic cell 28 only, or may be formed of a string 25 in which multiple photovoltaic cells 28 are connected in series, or may be a photovoltaic panel 30 in which multiple strings 25 are disposed in parallel rows to arrange photovoltaic cells in matrix format.

As illustrated in Fig. 7, the photovoltaic devices panel as the inspection-object 100 has a multi-layered structure, in which the multiple rows of strings 25 are sandwiched between a backside member 22 disposed at an upper side of the filling member 24 and a transparent cover glass 21 disposed at a lower side of the filling member 23, with strings 25 being disposed between the filling member 23 and 24.

The backside member 22 is made of, for example, polyethylene resin or the like. The filling members 23 and 24 are made of, for example, polyethylene vinyl acetate (EVA) resin. As described above, the string 25 is formed by connecting the photovoltaic cells 28 with lead wires 29 between electrodes 26 and 27.

The photovoltaic devices panel is formed by piling the aforementioned constructional members and performing a laminating process on the constructional members. The laminating process is performed with a laminator, etc., by pressing the constructional members in a vacuum heated state for cross-linking of the EVA resin.

The individual rectangular photovoltaic cell 28 will now be described in detail.

Fig. 8 is a plan view from the direction of a receiving optical side of the photovoltaic cell. In the photovoltaic cell, busbars are printed on a silicon semiconductor surface of a thin plate as electrodes for collecting electricity being taken out. In addition, fine conductors that are called fingers are printed on the silicon semiconductor surface perpendicularly to the busbars for efficient collecting of electricity to the busbars.

Moreover, a kind of photovoltaic device generally called thin film-type photovoltaic devices may be the inspection-object 100.

An exemplary typical structure of the thin film-type photovoltaic devices can be constructed by depositing a power generating element (including a transparent electrode, a semiconductor, and a backside electrode) on a transparent cover glass disposed in the lower part of Fig. 7.

Such a thin film-type photovoltaic panel is formed through a laminating process into the above-described structure by disposing a glass at a lower side, covering photovoltaic cells deposited on the glass with a filling member, and covering the filling member with a backside member.

The thin film-type photovoltaic devices panel as the inspection-object 100 replaces crystalline cells with the above-described power generating elements, and the basic sealing structure is identical to the photovoltaic devices panel formed of crystalline cells.

### Defects in Photovoltaic Cell

Defects in photovoltaic cells have distinctive shape features according to causes of the defects. Fig. 9 illustrates a feature of a finger break. In the case of a finger break, a rectangular dark region is formed in the direction of the broken finger.

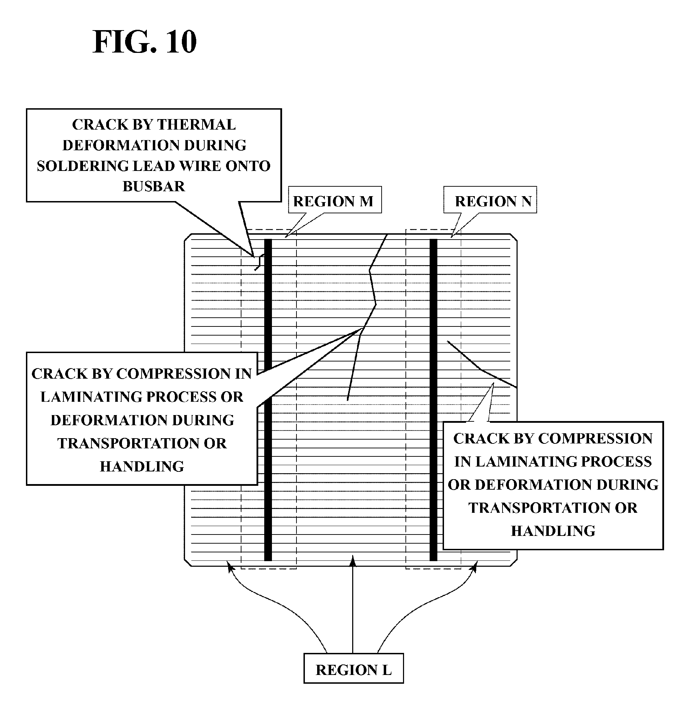

Fig. 10 illustrates a feature of a crack-shaped dark region according to the causes of the defects. In regions M and N adjacent to busbars, a crack can be formed by thermal deformation when a lead wire is soldered on the busbar. A crack is relatively small.

A crack may be caused by compression during a laminating process, or handling loads or impacts during a transportation or a module manufacturing process, and such a crack may be formed in a region L as well as the regions around the busbar. This kind of crack may be relatively large as compared with the above-described crack caused by soldering. Since a semiconductor is hard and fragile, generally, such a crack has a simple shape although the crack may have a bent portion.

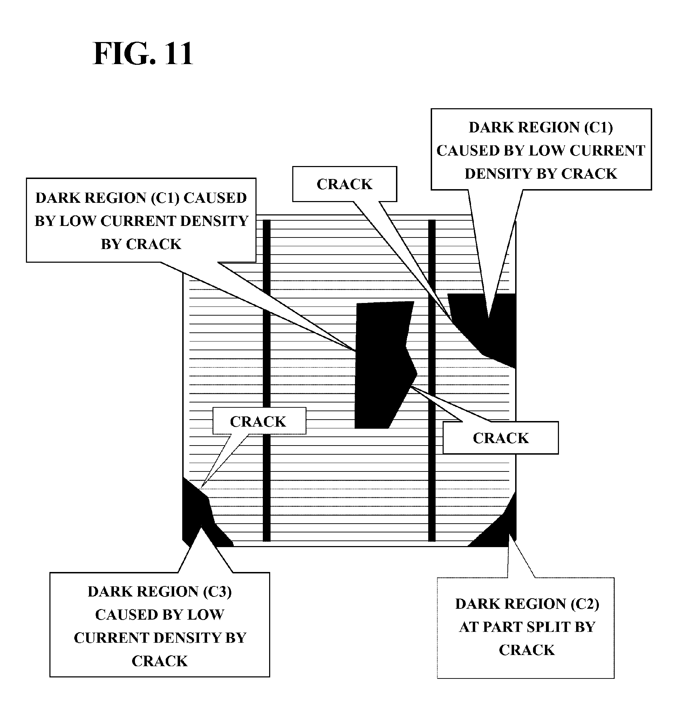

Fig. 11 illustrates a feature of a regional defect. According to the split state of a semiconductor by a crack, the shape of a dark region varies. If the semiconductor is split completely due to a crack as shown in a region C1 in the drawing, a dark region having an area is formed at an opposite site to a busbar. If a part of the semiconductor is completely removed as shown in a region C2 of the drawing, light is not emitted from the removed part, and thus a dark region having an area is formed. If a part of the semiconductor is completely split although it is not completely removed as shown in a region C3 of the drawing, a dark region having an area is formed from a crack to an end of the semiconductor. The darkness of above-described dark inside surface is usually uniform in the dark region. That is, it is rare that relatively bright and dark parts are complexly mixed in a dark region.

In a photographed image, a non-defective region can be shown as a dark region. Fig. 12 is an exemplary image photographed from a polycrystalline silicon cell. In the image, patterned dark regions that are distributed in the entire surface of the cell and have complex shape s are not defective regions but boundaries of crystals. In determining whether passed or not for a cell, non-defective dark regions should be distinguished from dark regions caused by defects. Therefore, various image processing techniques and criteria used to determine whether a cell passes inspection or not are considered as described later.

### Configuration of Photovoltaic Devices Inspection Apparatus of the Present Invention

Fig. 1 is a block diagram illustrating a schematic configuration of a photovoltaic devices inspection apparatus according to an embodiment of the present invention. In the embodiment, reference numeral 10 is a control unit which controls overall operations of the inspection apparatus and determine whether a photovoltaic devices pass inspection or not, and is configured by a personal computer. Reference numeral 20 is a memory that stores programs or a various types of data performed by the control unit 10. Reference numeral 30 is a reference data file that contains reference data for determining whether a photovoltaic devices panel passed or not.

Preset values are registered in the reference data file 30 according to the types of inspection-objects (cell/string/matrix, refer to Fig. 6). The preset values are as follows.
(1) Light emission conditions of photovoltaic cells
(2) Cell gap (camera shift pitch)
(3) The number of cells (vertical, horizontal) of string/matrix
(4) Preset information about dimensions of cells (busbar positions, corner chamfers, finger arrangements, DTP positions, etc.)

Dimensional information of cells may be set by a basic-pattern method of setting and filling in the screen (display), and by a setting method using graphic information. DXF and BMP format files are prepared as graphic information. In the case of the above-described method of setting and filling in the screen, multiple types can be selected for different patterns such as pattern (A) where the number of busbars is "1", pattern (B) where the number of busbars is "2", pattern (C) where the number of busbars is "3", and so on.
(5) Image processing conditions
(6) Image photographing conditions

Reference numeral 40 is an input/output control unit that controls input/output devices such as a keyboard 400 through which instructions commands or determined results whether passed or not are input, 50 is a camera control unit that controls a photovoltaic devices photographing camera 500 configured to photograph an image of photovoltaic devices panel as the inspection-object 100, 60 is a display control unit that controls a display unit 600 configured to display a photographed image, 70 is a measurement current control unit that applies a predetermined current (a predetermined forward current) to photovoltaic devices panel as the inspection-object 100 through a probe 75 that applies a current to the photovoltaic devices panel, and 80 is a position determination mechanism control unit that controls a camera position determination mechanism 800 which carries the camera 500 to a photographing position and determines the position of the camera 500. A camera photographing unit including the camera position determination mechanism 800 is illustrated in detail in Fig. 2.

In the apparatus of the present embodiment, the photovoltaic devices panel 100 works as EL light source by applying a forward predetermined current to the photovoltaic devices panel from the measurement current control unit 70 through the probe 75 and the state of EL light is photographed by the photovoltaic devices photographing camera 500. Since each cell of the photovoltaic devices panel is sequentially photographed, the camera 500 is moved according to the positions of the photovoltaic cells by the camera position determined mechanism 800.

In a darkroom, the camera 500 photographs the inspection-object 100 emitting a weak EL light ray having a wavelength of 1,000 nm to 1,300 nm. Therefore, it is necessary to use a camera having high sensitivity to a weak light ray as the camera 500. In the present embodiment, a S i-CCD camera of Model C9299-02 manufactured by Hamamatsu Photonics K. K. is employed as the camera 500.

Next, with reference to Fig. 2, explanations will be given on how the camera photographing unit 500 and the camera driving mechanism 800 are configured and controlled. In Fig. 2, detailed structures of the camera photographing unit 500 (photovoltaic devices photographing camera in the figure) including the camera position determination mechanism 800 are illustrated.

In the camera driving mechanism 800, a transparent plate 812 made of a synthetic resin such as an acryl resin or glass is disposed at a flat upper surface 811 of a square box type darkroom 810. Except for the transparent plate 812, the dark room 810 is made of shading materials so as to shade darkroom 810. It is necessary to cover a gap between the transparent plate 812 and the inspection-object 100 with a shading member. In the case where the inspection-object 100 (photovoltaic devices) is placed on the upper surface 811 and then the upper surface 811 and the inspection-object 100 is entirely covered with a shading means, the upper surface 811 may be wholly formed by a transparent plate. The other four lateral surfaces and bottom surface are made of shading members. A pair of guide members 814 is provided at the upper surface 811 for guiding the inspection-object 100 during transport.

The darkroom 810 is provided with the camera 500, and a Y axis guide part 830 for moving the camera 500 in the Y axial direction. A motor 832 is disposed at one end of the Y axis guide part 830. The camera 500 is moved forward or backward along the Y axial direction according to the rotation of the motor 832.

Both ends of the Y axis guide part 830 are supported by X axis guide parts 840, respectively. The Y axis guide part 830 can be moved forward or backward on the X axis guide parts along the X axial direction by a motor 842 and both-side timing belts 844.

In the aforementioned configuration, the X axis guide parts 840, the Y axis guide part 830, the motors 832 and 842, and the timing belts 844 constitute a driving mechanism for the camera 500. In the present embodiment, the X axis guide parts 840 and the Y axis guide part 830 are driven by the motors 832 and 842 and ball screws. However, the driving method is not limited to the above-described embodiment. For example, other linear actuators can be used.

By controlling the rotations of the motors 832 and 842 of the driving mechanism, the camera 500 can be moved to an arbitrary position on the X-Y plane so as to make it possible to photograph any part of the inspection-object 100.

The inspection-object (photovoltaic devices) may be a photovoltaic cell, a string which is formed by straightly connecting multiple photovoltaic cells with lead wires as illustrated in Fig. 6, or a photovoltaic devices panel in which multiple rows of strings are disposed in parallel to arrange photovoltaic cells in matrix format. The camera 500 may photograph the photovoltaic cells one by one or group by group, or the photovoltaic devices panel at a time.

In the inspection-object (photovoltaic panel 100), photovoltaic cells are arranged in a row and electrically connected to form a string, and such strings are arranged in parallel so as to dispose the photovoltaic cells in matrix format in horizontal and vertical directions. As illustrated in Fig. 7, a transparent glass plate is disposed at the lowermost side, an EVA (polyethylene vinyl acetate) resin used as a filling member, photovoltaic cells, an EVA, and an upper backside member formed of a resin are piled above the lower transparent glass plate. Then, they are pressed in heated vacuum state in a laminating apparatus to form a laminate structure by cross-linking of the EVA. The photovoltaic devices panel is carried out of the laminating apparatus and is then transported to the photovoltaic devices inspection apparatus of the present invention via a conveyer. The photovoltaic devices panel is transported to an upper side of the dark room 810 with guiding between the guide members 814.

As illustrated in Fig. 2, the photovoltaic devices panel 100 transported to the upper side of the darkroom 810 is positioned above the transparent plate 812 of the darkroom 810 with the transparent glass plate 21 facing downward, and the measurement current control unit 70 is connected to the inspection-object 100 through the probe 75. Since the inspection-object 100 is smaller than the transparent plate 812, light rays can enter the darkroom 810, and thus the upper surface of the darkroom 810 is entirely covered with a shading means (not shown) from the top side of the inspection-object 100. Or, it is necessary to cover a gap between the transparent plate 812 and the inspection-object 100 with a proper shading member.

It is described above that the shading means covers the entire upper surface of the darkroom 810. However, in the case of the photovoltaic devices panel, since the backside member disposed at the backside is made of an opaque resin, light can be shaded. Moreover, the upper surface 811 of the darkroom 810 is configured of a shading member except the transparent plate 812. In the case that the inspection-object 100 is larger than the transparent plate 812 and the inspection-object 100 covers the entire transparent plate 812, the shading means is not necessary.

In the case that the inspection-object 100 is smaller than the transparent plate, since light can enter the darkroom 810 through a gap, the inspection-obj ect 100 is covered with a shading means. The shading means covers at least a frame-shaped gap between the transparent plate 812 and the inspection-object 100. Therefore, the shading means may be sized at least to cover the gap.

Forward current is applied to the inspection-object 100 from the measurement current control unit 70. The inspection-object 100 emits EL light, so the camera 500 photographs it.

By rotational control of the driving mechanism motor 832 and 842, the camera 500 photographs the photovoltaic cells arranged in matrix format one by one, and sends image data to an image processing unit such as a personal computer (not shown.) The image processing unit extracts a non-emitting region (dark or shadow region) from the image of each photovoltaic cell and analyzes it, determines whether each photovoltaic cell is defective or non-defective, and determines whether whole photovoltaic devices panel is defective or non-defective in consideration of all of the individual determinations made for each of the photovoltaic cells.

In the present embodiment, a special darkroom is not necessary for inspecting photovoltaic devices. That is, photovoltaic devices may be inspected by placing the photovoltaic devices in the apparatus having the simple mechanism as shown in Fig. 2. Moreover, in the present embodiment, inspection apparatus is provided with only the camera position determination mechanism as shown in Fig. 2 and a computer system, and thus the following advantages can be achieved.

During a manufacturing process of a photovoltaic devices panel, for example a laminating process of a photovoltaic devices panel, generally, the photovoltaic devices panel is transported with its glass surface facing downward. In the inspection apparatus, the photovoltaic devices can be placed at the upper surface 811 of the darkroom with the receiving optical side of the photovoltaic devices facing downward, and thus a turning-over operation is unnecessary. Therefore, during a manufacturing process, a photovoltaic devices panel can be easily placed at the inspection apparatus.

### Inspection Flow of Photovoltaic Devices Panel

A method of determining defects in photovoltaic devices panel by an inspection apparatus having above-described configuration according to an embodiment of the present invention will now be described with reference to the flowchart of Fig. 3.

First, in step S1, the position of a photovoltaic devices panel (inspection-object 100) is positioned and placed at the upper surface 811 of the darkroom 810. Next, in step S3, the probe 75 is connected to a terminal part of the photovoltaic devices panel so that a current can be applied from the measurement current control unit 70 to the photovoltaic devices panel.

In step S5, the control unit 10 controls the position determination mechanism control unit 80 so as to place the camera 500 at an initial photographing position of the photovoltaic devices panel. In step S7, the measurement current control unit 70 is controlled to apply a predetermined forward current to the photovoltaic devices panel (inspection-object 100) for EL light emission of the photovoltaic devices panel. Light emission conditions (current values and current applying times) are preset according to inspection-objects and are registered in the reference data file 30. In the present embodiment, light emitting condition is configured such that three light emission conditions are set to one photographing condition. The reason for this is that excessive EL light emission or insufficient EL light emission can occur according to cell characteristics if only a single condition is used.

Since multiple light emission conditions are set, if it is determined that photographed results are insufficient during performing a photographed image process, light emission conditions can be changed according to the situation, and the procedure can return to step S7. In the following description, this return procedure is omitted.

In step S10, the control unit 10 controls the camera control unit 50 to photograph a photovoltaic cell emitting EL light by using the camera 500 and the photographed image is taken in the camera control unit 50 and is stored in, for example, predetermined regions of the memory 20 and an external memory device 900.

In step S12, the display control unit 60 is controlled to read the original photographed image from the memory 20 and display the photographed image on the display unit 600. In step S50, the control unit 10 performs the photographed image process for analyzing photographed image. The detailed defect-determination process in step S50 is described later. In step S16, according to results of the image process in step S50, regions of the image determined as defects are enhanced and the image is displayed on the display unit 600 by the display control unit 60. The image enhancing method is described later

Step S18 is a step of being manually inspected by an inspector (manual determination process) by using the enhanced image, which will be described in more detail in section <7>.

In step S20, the control unit stores the determined results of the cell in, for example, the external memory device 900.

In step S22, a count-up process is performed to advance the sequence number to the next one, which is allocated for each cells of the photovoltaic devices panel (inspection-object). In step S24, the count-up sequence number is checked so as to determine whether photographing and determination are completed for all the cells of the photovoltaic devices panel (inspection-object). If it is determined that photographing and determination are not completed for all cells, the procedure goes to step S30 to control the camera position determination mechanism 800 using the position determination mechanism control unit 80 so as to move the camera 500 to a photographing position of the next cell, and then the procedure returns to step S7 for performing photographing and determination on the next cell.

If in step S24 it is determined that photographing and determination are completed for all the photovoltaic cells, the procedure goes to step S26, and overall determination is performed as per the following description. Thereafter, other inspection points such as gaps between photovoltaic cells of the photovoltaic devices panel are checked to determine whether the photovoltaic devices panel is wholly passed or not, and the determined results are stored in, for example, a predetermined region of the external memory device 900. In this way, an overall determination of a sheet of photovoltaic panel is completed.

### Detailed Description of Photographed Image Process; S50

Next, with reference to Fig. 4, photographed image process step S50 will be described in detail.

In the image process, a region where light intensity is weak is extracted from the image of the cell. Next, the extracted dark region or shape where light intensity is weak is image-processed according to defect pattern of photovoltaic cells as shown in Figs. 9, 10, and 11. Image process conditions are registered in the reference data file 30. Then, the following processes are sequentially performed.

First, a scaling process is performed in step S52. According to the features of the cell, the total amount of light emission varies across the photovoltaic cell. In the scaling process, the brightest part is normalized to a predetermined lightness value, and the brightness of the whole image is adjusted to make it possible to compare brightness under a predetermined condition.

Next, in step S54, extraction of the regions of the cell is performed. In this process, the outline of the cell is automatically calculated with reference to cell dimension information registered in the reference data file 30. Even if the cell is not correctly placed in respect to the position and angle, the outline of the cell can be precisely calculated.

In step S56, a busbar removing process is performed to remove busbar regions from the photographed image for determining whether passed or not. The regions of busbars of the cell are automatically calculated with reference to cell dimension information previously stored in the reference data file 30, and then the busbar regions are removed so as to determine the cell whether passed or not without the busbar regions. In this process, even if the position or angle of the cells not correct, the busbar regions can be exactly calculated.

In step S58, a shading correction process is performed. According to the characteristics of a lens of the camera 500, basically, the center region of the image may be brighter than the peripheral region. Thus, this brightness difference caused by the lens characteristics of the camera is compensated by this process.

In step S60, a fragment detecting process is performed. This fragment detecting process is performed by extracting a dark region having an area greater than a threshold value as a fragment from dark region located around the periphery of a cell. And whether it is a shadow or not is determined by comparing a decreasing ratio of the brightness with a threshold value. This manner is carried out in following processes.

Generally, a dark region of a fragment caused by a defect is uniformly dark as compared with a neighboring bright region as shown in Fig. 11. However, in a dark region not caused by a defect, bright and dark parts are complexly mixed as shown in Fig. 12.

Averaging the distribution of the brightness of the image where bright and dark parts are complexly mixed will decrease the difference between bright and dark parts and the boundary will vanish. Meanwhile, for the fragment caused by a defect, the boundary between bright and dark parts will remain after the same averaging process. So, by detecting the boundary, the fragment parts can be easily extracted.

In case of generating an enhanced image to display an enhanced determination result, an image enhancing process is performed on a dark region determined to be a fragment, so as to be able to perform the display described in step S16, for example, by colorizing the display corresponding to the determination result.

In step S62, a finger break detection process is performed. In this process, if a dark region of the cell image has an area equal to or greater than a predetermined value, the dark region is detected as a finger break. In this process, a finger break can be detected by performing the same brightness averaging as that performed in the fragment detection process, and extracting a uniform dark region. A dark region caused by a finger break generally has a rectangular shape in the direction of a finger as shown in Fig. 9. Therefore, with reference to finger direction information stored in the reference data file 30, a dark region having a shape similar to a rectangular and consistent with the finger direction is identified as a finger break.

In case of generating an enhanced image to display an enhanced determination result, an image enhancing process is performed to a dark region determined to be a finger break, so as to be able to perform the display described in step S16, for example, by colorizing the display corresponding to the determination result.

In step S64, a crack detection process is performed. Here, except a dark region of a finger break, a dark region having a linear shape equal to or longer than a predetermined length is detected as a crack. Generally, a dark region caused by a crack has a partial bent linear shape as shown in Fig. 10 and relatively simple shape. Hereinafter, a method of determining a crack will be explained with reference to Fig. 13.

A dark region caused by a crack has a shape formed by a combination of simple segments as described below. In the crack detection process, dark parts (A), (B), and (C) caused by a crack are recognized as a single crack, and the length of the crack is calculated as the sum of the lengths of the dark segments (A), (B), and (C). In the case of a dark region caused by only a crack, only based on whether segments are connected at joints, it can be determined whether the segments are included in the same dark region.

As explained in the preceding section, Defect of Photovoltaic Cell, a dark region not caused by a crack can exist in a photographed image. If such a dark region is overlapped with a joint point of a dark region caused by a crack, it is difficult to recognize the crack only by checking a joint part of line.

Since a dark region caused by a crack has a relatively simple shape (the angle of a joint point is obtuse) as shown in Fig. 13, it can be considered that directions of segments are not largely different. However, since a dark region not caused by a crack has a random direction, there is a low possibility that the direction of such a dark region is consistent with the direction of a crack.

In the case of determining the next dark region connected to a joint point, all cracks can be easily recognized by determining a dark region having a direction similar to that of the previous dark region as the next dark region.

In case of generating an enhanced image to display an enhanced determination result, an image enhancing process is performed to a dark region determined to be a crack, so as to be able to perform the display described in step S16, for example, colorizing the display corresponding to the determination.

In the determination of step S66, the sizes (areas, lengths) and numbers of detected fragments, finger breaks, and cracks are compared with predetermined threshold values so as to determine whether the photovoltaic cell passes or not. Next, in step S68, the determination results are output.

As explained above, a dark region not caused by a crack can exist in a photographed image. If a crack determination reference (crack length threshold value to recognize as a crack) is lowered, a dark region not caused by a crack can be misidentified as a crack. Therefore, the following criteria are used for identifying a crack.

As determination references at the overall determination step S66, three kinds of references corresponding to regional characteristics of a cell are prepared. As illustrated in Fig. 10, a photovoltaic cell is divided into periphery regions of busbar (regions M and N) and other region L. First determination reference is prepared for the region L (except for the regions M and N). A restrictive extraction of large cracks is preferable to extract a crack exactly and not to extract a dark region except a crack. A second determination reference is prepared for the region M. Cracks including a small crack that is formed when lead wire are soldered onto the busbars are extracted. A third determination reference is prepared for the region N, and it is same as the second reference. By identifying a long linear dark region as a crack in the first determination reference, a crack can be exactly extracted, and detection of a dark region not caused by a crack can be not extracted. By identifying a short linear dark region as a crack using the second and third determination references, even a small crack can be extracted accurately.

In an automatic determination of cells, the existence of fragments, finger breaks, and cracks are determined. A cell not having such defects is identified as a non-defective cell. If defects are detected, cells are graded based on detected information on fragments, finger breaks, and cracks.

The grading is conducted based on the following items. (1) Sum of areas of detected fragments, (2) sum of areas of detected finger breaks, and (3) sum of lengths of detected cracks are compared with predetermined threshold values to give grades to each of items ((1), (2) and (3)). For example, five grades of A, B, C, D, and E are given, where A means the highest grade and E means the lowest grade. A cell determined as a defective cell is given E grade in the automatic determination. If the grade of a cell is equal to or lower than a predetermined grade, it is determined as defective (NG). The precise predetermined grade can be varied as necessary.

### Automatic determination; S26

If an inspection-object is a cell, a determined result of the cell is an overall determined result of the product. However, if an inspection-object is a string or matrix, automatic determination of a product is performed as follows.

Overall determination of the cell is performed based on the determination reference for each cell and the number of cells counted according to each grades. For example, if the number of cells having grades equal to or lower than a preset grade is equal to or greater than a preset number, the product is determined to be defective. For instance, the product may be determined to be defective if the product is in any one of the three cases: the number of cells having grade C or lower grades is five or more; the number of cells having grade D or lower grades is three or more; and the number of cells having grade E is one or more.

### Manual Determination by Inspector; S18

In the photovoltaic devices inspection apparatus of the present embodiment, if a photographed image is determined to be problematic, the dark region can be enhanced and displayed on a display unit. After stopping the automatic determination operation of the photovoltaic devices inspection apparatus, an inspector can manually determine the image displayed on the display unit (refer to step S18 of Fig. 3). The manual determination is performed by an inspector as follows.

In step S18 of Fig. 3, an inspector determines whether passed or not while watching the enhanced image, and inputs the determined result through the keyboard 400. In the case where the display unit 600 is a touch panel, the inspector can input the determined result by touching the displaying panel of display unit 600.

In the inspection apparatus of the present embodiment, an inspector can choose to set a determination function as effective/non-effective, an automatic determination function as effective/non-effective, and a manual determination function as effective/non-effective, so as to determine whether passed or not of a product while checking the photographed image of the product displayed on the display unit. In the case where an inspector inspects a string or matrix product, when all cells of the product are determined whether passed or not, the inspector may push a product determination completion button or the like to finish inspection of the product (photovoltaic devices panel).

Fig. 5 is an example of an original image of step S12 and a defect-enhanced determination image of step S16 according to an embodiment of the present invention. Fig. 5 (a) illustrates an original image, and Fig. 5 (b) illustrates a defect-enhanced determination image. During a manual determination, an inspector can determine while comparing the two images, so that determination whether passed or not can be made on the photograph image more easily and reliably.

### Enhancing and Processing of Image; S16

By analyzing the photographed image in the above-described analyzing process, defect-enhanced determination image in the above-described step S16 is as follows, in the case that the normally EL light emitting region is detected as a dark region except normally EL light non-emitting dark region as busbar part etc.
(1) In case that the region is determined by above-described determination as a fragment caused by a defect, for example, in the case of the dark region shown on the extreme left of Fig. 5, whole areas determined as dark region are displayed in distinction from around region with distinguishable brightness (refer to (A) regional defect in Fig. 5(b)). If color display is available, a particular color like yellow is preferably used for displaying the region.
(2) In case that the region is identified by above-described determination as a finger break, for example, in the case of the region shown on slightly top of the center of Fig. 5, certain width areas around the center of the dark region determined as the finger break are displayed in distinction from around region with distinguishable brightness (refer to Fig. 5 (b)(B)). If color display is available, a particular color like yellow-green is preferably used for displaying the region.
(3) In case that the region is determined by above-described determination as a crack, for example, in the case of the region shown on slightly bottom of left of Fig. 5, a line with certain width around the center of the region are displayed in distinction from other regions with distinguishable brightness (refer to Fig. 5 (b)(C)). If color display is available, a particular color like red is preferably used for displaying the region.

In case (3), the dark region does not make a dark region indicating defect on surrounding area, but the dark region possibly may expand to make surrounding area defective during long-time usage. Since the region is displayed as a line with certain width, a location of the region in a photographed image is easily recognized. An inspector who determines the defect of the cell compares the photographed image with the enhanced image, so as to recognize easily and reliably the region of the photographed image that is determined to be problematic.

## Claims

1. A photovoltaic devices inspection apparatus for determining whether a photovoltaic cell of photovoltaic devices is defective or non-defective, the photovoltaic devices inspection apparatus **characterized by**:
a power unit configured to apply a predetermined current to a photovoltaic device as an inspection-object in a shading space;
a photographing unit configured to photograph an emitting light cell by cell that is emitted from the cell in response to a current applied from the power unit;
an analyzing unit configured to analyze a cell image photographed by the photographing unit; and
a displaying unit configured to visually display an analyzed result obtained by the analyzing unit,
the analyzing unit analyzing a shape of a dark region of photographed cell image by enhancing a cell image photographed by the photographing unit to determine whether a photovoltaic cell is defective or non-defective.

2. The photovoltaic devices inspection apparatus according to claim 1, **characterized in that** the displaying unit displays a dark region, which is identified as having a problem by the analyzing unit, emphatically on the displaying unit.

3. The photovoltaic devices inspection apparatus according to claim 1 or 2, **characterized in that** the photographing unit photographs multiple photovoltaic cells sequentially, and the analyzing unit determines a distance between adjacent cells that are photographed by the photographing unit.

4. The photovoltaic devices inspection apparatus according to claim 1 to 3, **characterized in that** the analyzing unit detects a micro crack to determine whether a photovoltaic cell has a possibility to become defective in the future.

5. The photovoltaic devices inspection apparatus according to claim 1 to 4, **characterized in that** the analyzing unit analyzes a shape, a direction, and a location of a dark region of a photographed cell image to determine a status of the cell.

6. The photovoltaic devices inspection apparatus according to claim 1 to 5, **characterized in that** the displaying unit simultaneously visually displays a cell image on which a dark region determined by the analyzing unit is displayed emphatically together with a cell image photographed by the photographing unit.

7. A method of determining defects with the photovoltaic devices inspection apparatus described in claim 1 to 6, the method **characterized by**:
applying a predetermined current to a photovoltaic cell as an inspection-object in a shading space;
photographing an emitting light cell by cell that is emitted from the cell in response to a current applied from the power unit; and
analyzing a shape of a dark region of the photographed cell image by enhancing the photographed cell image so as to determine whether the photovoltaic cell is defective or non-defective.

8. The method of determining defects in photovoltaic devices according to claim 7, **characterized in that** the dark region, which is identified as having a problem in the analyzed result, is displayed emphatically.

9. The method of determining a defect in photovoltaic devices according to claim 7 or 8, **characterized in that** the multiple photovoltaic cells are photographed sequentially, and the distance between adjacent cells is determined to determine whether location of adjacent cells is correct or not.

10. The method of determining a defect in photovoltaic devices according to claim 7 to 9, **characterized in that**, in analyzing the photographed image, a micro crack is detected so as to determine whether a photovoltaic cell has a possibility to become defective in the future.

11. The method of determining a defect in photovoltaic devices according to claim 7 to 10, **characterized in that**, in analyzing the photographed image, a shape, a direction, and a location of a dark region of a photographed cell image are analyzed so as to determine a status of the cell.

12. The method of determining a defect in photovoltaic devices according to claim 7 to 11, **characterized in that** the cell image with the dark region identified as having a problem enhanced and the photographed cell image are simultaneously visually displayed.
